# EUROPÄISCHE PATENTSCHRIFT

(11) **EP 4 698 790 B1**
(45) Veröffentlichungstag und Bekanntmachung des Hinweises auf die Patenterteilung: **18.11.2026**
(21) Anmeldenummer: 24821779.6
(22) Anmeldetag: 06.12.2024
(51) Int. Cl.: F16B 25/00, F16B 25/10

(54) **FLIESSLOCHFORMENDE SCHRAUBE, ANORDNUNG MIT EINER FLIESSLOCHFORMENDEN SCHRAUBE UND VERFAHREN ZUM VERBINDEN VON MINDESTENS ZWEI WERKSTÜCKEN**
FLOW DRILLING SCREW, ARRANGEMENT HAVING A FLOW DRILLING SCREW, AND METHOD FOR CONNECTING AT LEAST TWO WORKPIECES
VIS DE FORAGE À ÉCOULEMENT, AGENCEMENT DOTÉ D'UNE VIS DE FORAGE À ÉCOULEMENT, ET PROCÉDÉ DE RACCORDEMENT D'AU MOINS DEUX PIÈCES À USINER

(30) Priorität: 11.12.2023 DE 102023134650
(43) Veröffentlichungstag der Anmeldung: 25.02.2026
(73) Patentinhaber: Arnold Umformtechnik GmbH & Co. KG, 74670 Forchtenberg-Ernsbach (DE)
(72) Erfinder: SCHMETZER, Nadine, 74545 Michelfeld (DE); MILLER, Heiko, 74629 Pfedelbach (DE); QUIRIN, Oliver, 70439 Stuttgart (DE); HEIN, Tobias, 87435 Kempten (DE)
(74) Vertreter: Patentanwälte Ruff, Wilhelm, Beier, Dauster & Partner mbB
(86) Internationale Anmeldenummer: PCT/EP2024/084996
(87) Internationale Veröffentlichungsnummer: WO 2025/125098

(56) Entgegenhaltungen:
- DE-A1- 102010 000 702
- DE-U1- 29 616 218

## Beschreibung

Die Erfindung betrifft eine fließlochformende Schraube, eine Anordnung mit einer fließlochformenden Schraube und ein Verfahren zum Verbinden von mindestens zwei Werkstücken.

Fließlochformende Schrauben werden eingesetzt, um mehrere Bauteile, von denen wenigstens eines nicht vorgelocht ist, beispielsweise zwei Bleche, miteinander zu verbinden. Die fließlochformende Schraube wird mit ihrer Spitze auf eines der Werkstücke aufgesetzt, angedrückt und in Drehung versetzt. Die beiden Werkstücke werden durch die entstehende Reibungswärme erwärmt und die Spitze der fließlochformenden Schraube dringt in die beiden Werkstücke ein und formt dadurch eine Durchgangsöffnung in den beiden Werkstücken. Die fließlochformende Schraube ist mit einem Furchgewinde versehen, so dass sich die Schraube in der mittels der lochformenden Spitze erzeugten Durchgangsöffnung selbst ein Gewinde einfurcht. Die Verbindung hochfester und/oder dicker Werkstücke mit fließlochformenden Schrauben stellt hohe Anforderungen an die Ausbildung der fließlochformenden Schrauben.

Aus der deutschen Offenlegungsschrift DE 10 2010 000 702 A1 ist eine fließlochformende Schraube mit einem Schaft und einem Schraubenkopf mit einer Antriebsausbildung bekannt, wobei der Schaft abschnittsweise mit einem Furchgewinde und mit einer lochformenden, gewindefreien Spitze versehen ist, wobei die lochformende Spitze wenigstens abschnittsweise einen polygonartigen Querschnitt aufweist.

Aus der deutschen Gebrauchsmusterschrift DE 296 16 218 U1 ist eine loch- und gewindeformende Dünnblechschraube bekannt. Die Schraube weist eine gewindefreie Spitze auf, wobei die Spitze einen vorderen, kegelförmigen Abschnitt und einen Übergangsabschnitt mit mehreren Abflachungen am Umfang aufweist. Auf dem Übergangsabschnitt folgt der Gewindeabschnitt der Schraube.

Mit der Erfindung sollen eine fließlochformende Schraube, eine Anordnung mit einer fließlochformenden Schraube und ein Verfahren zum Verbinden von wenigstens zwei Werkstücken verbessert werden.

Die der Erfindung zugrunde liegende Aufgabe wird durch eine fließlochformende Schraube mit den Merkmalen von Anspruch 1, eine Anordnung mit den Merkmalen von Anspruch 13 und ein Verfahren zum Verbinden zweier Werkstücke mit den Merkmalen von Anspruch 14 gelöst.

Vorteilhafte Weiterbildungen der Erfindung sind in den jeweiligen Unteransprüchen angegeben. Eine erfindungsgemäße fließlochformende Schraube weist einen Schaft und einen Schraubenkopf mit einer Antriebsausbildung auf, wobei der Schaft abschnittsweise mit einem Furchgewinde und mit einer lochformenden, gewindefreien Spitze versehen ist. Die lochformende Spitze weist wenigstens abschnittsweise einen polygonartigen Querschnitt auf, wobei der polygonartige Querschnitt mehrere konvexe erste Umfangsabschnitte mit großem Krümmungsradius und mehrere konvexe zweite Umfangsabschnitte mit kleinem Krümmungsradius aufweist. Jeweils ein zweiter Umfangsabschnitt mit kleinem Krümmungsradius ist zwischen zwei ersten Umfangsabschnitten mit großem Krümmungsradius angeordnet. Die Umfangsabschnitte sind so ausgebildet und gehen so ineinander über, dass zwischen den ersten Umfangsabschnitten und den zweiten Umfangsabschnitten keine Kante angeordnet ist. Insbesondere gehen die ersten Umfangsabschnitte und die zweiten Umfangsabschnitte tangential ineinander über. Eine Querschnittszunahme der Spitze in einem ersten Bereich der Länge, der vom freien Ende der Spitze bis zum 0,2-fachen bis 0,4-fachen der Länge geht, insbesondere bis zu einem Drittel der Länge geht, ist größer als im weiteren Verlauf der Spitze bis zum Furchgewinde. Eine Querschnittszunahme der lochformenden Spitze ist ausgehend vom freien Ende der Spitze demzufolge zunächst groß und verringert sich dann bis zum Ende der lochformenden Spitze. Es hat sich herausgestellt, dass mit einer solchen Formgebung der lochformenden Spitze auch sehr dicke Werkstücke zuverlässig mit der lochformenden Schraube miteinander verbunden werden können. Das sogenannte K-Maß, definiert durch eine Differenz der Durchmesser eines Umkreises und eines Inkreises des polygonartigen Querschnitts, kann über die Länge der lochformenden Spitze gleich bleiben oder sich ändern.

In Weiterbildung der Erfindung ist eine Querschnittszunahme der Spitze in einem zweiten Bereich der Länge der Spitze, der sich an den ersten Bereich anschließt und bis zum 0,4-fachen bis 0,7-fachen der Länge der Spitze geht, insbesondere ein zweites Drittel der Länge der Spitze einnimmt, größer als eine Querschnittszunahme in einem dritten Bereich der Länge der Spitze, der sich an den zweiten Bereich anschließt und bis zum Beginn des Furchgewindes geht, insbesondere ein drittes Drittel der Länge der Spitze einnimmt.

Die Außenkontur der lochformenden Spitze wird infolgedessen vom freien Ende her gesehen zum Furchgewinde hin flacher. Auf diese Weise können auch dicke Werkstoffpaarungen mit der lochformenden Spitze zuverlässig durchdrungen werden.

In Weiterbildung der Erfindung ändert sich eine Differenz der Durchmesser eines Umkreises und eines Inkreises des polygonartigen Querschnitts über die Länge der lochformenden Spitze.

Mittels einer solchen Änderung des sogenannten K-Maßes können die Eindringeigenschaften der lochformenden Spitze beeinflusst werden. Insbesondere kann eine Kontaktfläche zwischen Spitze und Werkstück beim Aufsetzen, Drehen und Lochformen beeinflusst werden, um eine zuverlässige Lochformung und Durchdringung der Werkstücke sicherzustellen.

In Weiterbildung der Erfindung ist die Differenz der Durchmesser des Umkreises und des Inkreises des polygonartigen Querschnitts über die gesamte Länge der lochformenden Spitze gesehen größer null, insbesondere größer als 0,1 mm.

Gerade bei Werkstückpaarungen mit großer Dicke und einer langen lochformenden Spitze der fließlochformenden Schraube ist eine polygonartige Ausbildung des Querschnitts der lochformenden Spitze über deren gesamten Länge äußert vorteilhaft. Die Differenz der Durchmesser des Umkreises und des Inkreises des polygonartigen Querschnitts (K-Maß) kann über die gesamte Länge der lochformenden Spitze konstant sein.

In Weiterbildung der Erfindung steigt die Differenz der Durchmesser des Umkreises und des Inkreises des polygonartigen Querschnitts (K-Maß) ausgehend vom freien Ende der lochformenden Spitze zunächst an und nimmt dann bis zum Übergang in das Furchgewinde wieder ab.

In Weiterbildung der Erfindung steigt die Differenz der Durchmesser des Umkreises und des Inkreises des polygonartigen Querschnitts (K-Maß) ausgehend vom freien Ende der lochformenden Spitze in dem ersten Bereich der Länge der lochformenden Spitze an und sinkt bis zum Übergang in das Furchgewinde wieder ab.

Es hat sich herausgestellt, dass ein Anstieg des sogenannten K-Maßs etwa bis zum ersten Drittel der Länge vorteilhaft für eine zuverlässige und prozesssichere Ausbildung der Durchgangsöffnung mittels der lochformenden Spitze ist.

In Weiterbildung der Erfindung steigt die Differenz des Durchmessers des Umkreises und des Inkreises des polygonartigen Querschnitts (K-Maß) ausgehend vom freien Ende der lochformenden Spitze vom Ausgangswert bis auf das 2-fache bis 3-fache des Ausgangswerts an, wobei insbesondere der Ausgangswert ausgehend vom freien Ende der Spitze bei 1/20 bis 1/10 der Länge der lochformenden Spitze gemessen wird.

Ein solcher deutlicher Anstieg des Ausgangswerts bis auf das 2-fache bis 3-fache des Ausgangswerts ermöglicht eine zuverlässige und prozesssicher auszuführende Bildung der Durchgangsöffnung mittels der lochformenden Spitze. Insbesondere dann, wenn das freie Ende der Spitze abgerundet ist, wird dabei der Ausgangswert bei 1/20 bis 1/10 der Länge der lochformenden Spitze gemessen, also nach dem Ende der Abrundung der Spitze.

In Weiterbildung der Erfindung liegt der Ausgangswert der Differenz der Durchmesser des Umkreises und des Inkreises des polygonartigen Querschnitts (K-Maß) zwischen 0,1 mm und 0,2 mm, insbesondere zwischen 0,1 mm und 0,15 mm.

In Weiterbildung der Erfindung steigt die Differenz der Durchmesser des Umkreises und des Inkreises des polygonartigen Querschnitts (K-Maß), ausgehend vom freien Ende der lochformenden Spitze, zunächst an und nimmt dann bis zum Übergang in das Furchgewinde wieder bis auf den Anfangswert am freien Ende der Spitze, insbesondere bei 1/20 bis 1/10 der Länge der Spitze, ab oder nimmt bis auf das 1,6-Fache bis 1,3-Fache des Ausgangswerts ab.

In Weiterbildung der Erfindung ändert sich, über die Länge der lochformenden Spitze gesehen, eine Winkelposition der ersten Umfangsabschnitte und der zweiten Umfangsabschnitte um eine Mittellängsachse des Schafts.

Insbesondere weist der polygonartige Querschnitt über die Länge der lochformenden Spitze gesehen einen Drall auf. Das Vorsehen eines Dralls des polygonartigen Querschnitts an der lochformenden Spitze erleichtert die zuverlässige und prozesssichere Ausbildung der Durchgangsöffnung mittels der lochformenden Spitze. Der Drall bewirkt eine Kraftreduzierung beim Lochformen. Es kann also mit weniger Kraft das Loch geformt werden oder bei gleicher Kraft die Dauer des Lochformens verringert werden.

In Weiterbildung der Erfindung ändert sich die Winkelposition der ersten Umfangsabschnitte und der zweiten Umfangsabschnitte über die gesamte Länge der Spitze gesehen zwischen 0° und 50°, insbesondere zwischen 20° und 45°.

In Weiterbildung der Erfindung ändert sich die Winkelposition der ersten Umfangsabschnitte und der zweiten Umfangsabschnitte in dem ersten Bereich der Länge der lochformenden Spitze stärker als in dem zweiten Bereich und dem dritten Bereich der Länge der Spitze, wobei sich der zweite Bereich an den ersten Bereich anschließt und der dritte Bereich vom Ende des zweiten Bereichs bis zum Übergang in das Furchgewinde geht. Über die gesamte Länge der Spitze kann ein Drall vorhanden sein. Der Drall kann sich über die gesamte Länge der Spitze verändern.

Ein stärkerer Drall des polygonartigen Querschnitts in einem Längenbereich, der sich an das freie Ende der Spitze anschließt, erleichtert das Durchdringen der Werkstücke und kann dadurch eine zuverlässige und prozesssichere Ausbildung der Durchgangsöffnung mittels der lochformenden Spitze sicherstellen.

In Weiterbildung der Erfindung ändert sich die Winkelposition der ersten Umfangsabschnitte und der zweiten Umfangsabschnitte im ersten Bereich der Länge der Spitze zwischen 0° und 50°, insbesondere zwischen 20° und 45°. In Weiterbildung der Erfindung liegt ein Krümmungsradius am freien Ende der Spitze zwischen 0,4 mm und 0,6 mm.

In Weiterbildung der Erfindung beträgt eine Länge der lochformenden Spitze 40% bis 60%, insbesondere 50 %, der Länge des Schraubenschafts.

In Weiterbildung der Erfindung ist die Schraube aus einem legierten oder unlegierten Werkzeugstahl hergestellt.

Die hohen Materialanforderungen an die fließlochformende Schraube lassen sich durch einen Werkzeugstahl erfüllen. Der Werkzeugstahl kann unlegiert sein, beispielsweise ein C-Stahl, insbesondere C62-Stahl, oder legiert sein, beispielsweise ein Chrom-Vanadium-Stahl.

In Weiterbildung der Erfindung ist der Werkzeugstahl gehärtet.

Im Rahmen der Erfindung kann dabei lediglich ein Abschnitt der fließlochformenden Schraube, beispielsweise lediglich die fließlochformende Spitze, gehärtet sein. Unterschiedliche Abschnitte der Schraube können eine unterschiedliche Härte aufweisen.

In Weiterbildung der Erfindung ist die Schraube mit einer Korrosionsschutzbeschichtung und einer Versiegelung versehen.

Beispielsweise wird die fließlochformende Schraube mit einer ZnNi-Beschichtung als Korrosionsschutz beschichtet und zusätzlich mit einer organischen transparenten Beschichtung zur Versiegelung beschichtet. Eine Versiegelung kann das Gewindeformen positiv beeinflussen.

Die der Erfindung zugrunde liegende Aufgabe wird auch durch eine Anordnung mit einer erfindungsgemäßen fließlochformenden Schraube und wenigstens zwei Werkstücken gelöst, die mittels der fließlochformenden Schraube miteinander verbunden sind, wobei eine Länge der Spitze gleich groß ist wie oder größer ist als eine Länge einer mittels der Schraube in den beiden Werkstücken hergestellten Durchgangsöffnung.

Auf diese Weise kann die Durchgangsöffnung mittels der lochformenden Spitze zunächst ausgeformt werden und erst dann greift das Furchgewinde in die hergestellte Durchgangsöffnung ein. Dadurch kann das Furchgewinde zuverlässig ausgeformt werden, da sich ein Vorschub der fließlochformenden Schraube zwischen dem Bilden der Durchgangsöffnung mittels der lochformenden Spitze und dem Einfurchen eines Gewindes unterscheidet. Als Länge der Durchgangsöffnung wird die in dem gesamten Verbund hergestellte Länge der Durchgangsöffnung bezeichnet, mit der die Schraubenspitze in Kontakt steht, also insbesondere die Dicke der zu verbindenden Bauteile und die Länge eines beim Lochformen entstehenden Durchzugs.

Die der Erfindung zugrunde liegende Aufgabe wird auch durch ein Verfahren zum Verbinden von wenigstens zwei Werkstücken mit einer erfindungsgemäßen fließlochformenden Schraube gelöst, bei dem das Herstellen einer Durchgangsöffnung mittels der lochformenden Spitze der Schraube vorgesehen ist und nach dem Herstellen der Durchgangsöffnung das Furchen eines Gewindes in der Durchgangsöffnung mittels des Furchgewindes der Schraube vorgesehen ist.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine Seitenansicht einer erfindungsgemäßen fließlochformenden Schraube,
- Fig. 2: eine Draufsicht auf die fließlochformende Schraube der Fig. 1,
- Fig. 3: eine teilweise geschnittene, schematische Ansicht einer Anordnung mit der fließlochformenden Schraube der Fig. 1 und zwei Werkstücken,
- Fig. 4: eine teilweise geschnittene Seitenansicht der Schraube der Fig. 1,
- Fig. 5: eine Darstellung der prozentualen Querschnittszunahme der lochformenden Spitze der Schraube der Fig. 1,
- Fig. 6: zwei schematische Ansichten der lochformenden Spitze der Schraube der Fig. 1, die den Drall erkennen lassen, und
- Fig. 7: eine Darstellung des K-Maßes des polygonartigen Querschnitts der lochformenden Spitze der Schraube der Fig. 1 über die Länge der lochformenden Spitze gesehen.

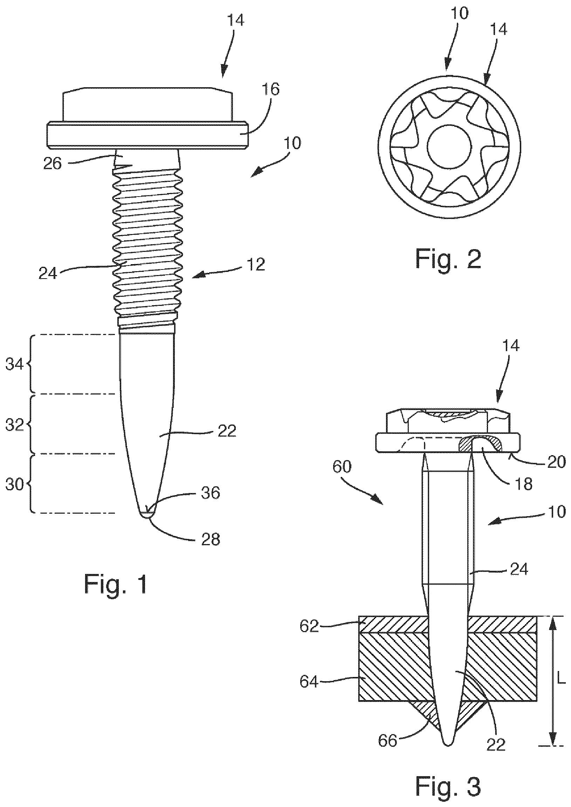

Fig. 1 zeigt eine erfindungsgemäße lochformende Schraube 10, die einen Schaft 12 und einen Schraubenkopf 14 hat. Der Schraubenkopf 14 ist mit einer Antriebsausbildung versehen, die in der Draufsicht der Fig. 2 besser zu erkennen ist. Mittels der Antriebsausbildung kann die Schraube 10 in Drehung versetzt werden.

Der Schraubenkopf 14 ist neben der Antriebsausbildung mit einem zylindrischen Abschnitt 16 versehen, in dem, vgl. Fig. 3, eine Umfangsnut 18 ausgebildet ist. Nach dem vollständigen Eindrehen der Schraube 10 in ein Werkstück oder zwei Werkstücke nimmt die Nut 18 beim Ausbilden einer Durchgangsöffnung in den Werkstücken und beim Einfurchen eines Furchgewindes gegebenenfalls von der Oberseite der Werkstücke aufsteigendes Material auf, so dass ein außerhalb der Nut 18 liegender Ringabschnitt 20 der Unterseite des Schraubenkopfs 14 flächig auf der Oberseite eines Werkstücks aufliegen kann.

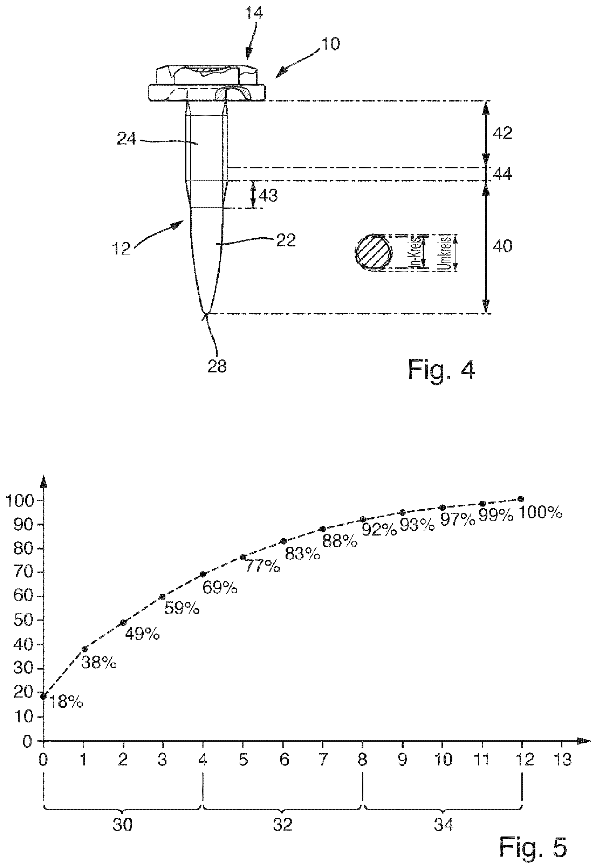

Der Schraubenschaft 12 ist ausgehend von seinem freien Ende mit einer lochformenden Spitze 22 versehen. Die lochformende Spitze 22 weist einen polygonartigen Querschnitt auf, der mehrere erste Umfangsabschnitte mit kleiner konvexer Krümmung und großem Krümmungsradius und mehrere zweite Umfangsabschnitte mit großer konvexer Krümmung und kleinem Krümmungsradius aufweist, wobei jeweils ein zweiter Umfangsabschnitt mit großer Krümmung und kleinem Krümmungsradius zwischen zwei ersten Umfangsabschnitten mit kleiner Krümmung und großem Krümmungsradius angeordnet ist. Übergänge zwischen den einzelnen Umfangsabschnitten sind ausgerundet, so dass am Übergang zwischen jeweils einem ersten Umfangsabschnitt und einem zweiten Umfangsabschnitt keine Kante auftritt. Der polygonartige Querschnitt der lochformenden Spitze 22 ist schematisch in Fig. 4 angedeutet. Der polygonartige Querschnitt weist einen Umkreis und einen Inkreis auf. Eine Differenz zwischen dem Umkreis und dem Inkreis definiert das sogenannte K-Maß, das ein Maß für die Abweichung des polygonartigen Querschnitts von einer Kreisform bildet. Auf die lochformende Spitze 22 folgt ein Furchgewinde 24. Das Furchgewinde 24 weist ausgehend von dem Ende der lochformenden Spitze 22 zunächst einen ansteigenden Außendurchmesser auf. Im weiteren Verlauf des Furchgewindes 24 hat dieses dann einen konstanten Außendurchmesser.

Zwischen dem Ende des Furchgewindes 24 und der Unterseite des Schraubenkopfs 14 liegt noch ein kurzer, gewindefreier Abschnitt 26, der auch als Gewindeauslauf Unterkopf bezeichnet wird.

Es ist Fig. 1 zu entnehmen, dass eine Querschnittszunahme ausgehend vom freien Ende 28 der lochformenden Spitze 22 bis zum Furchgewinde 24 nicht gleichmäßig erfolgt, sondern mit zunehmender Entfernung vom freien Ende 28 der lochformenden Spitze 22 abnimmt. Insbesondere ist zu erkennen, dass das freie Ende 28 der lochformenden Spitze 22 abgerundet ist. In einem ersten Bereich 30 der Länge der lochformenden Spitze 22, wobei der erste Bereich 30 bei der dargestellten Ausführungsform einem ersten Drittel der Länge der Spitze 22 entspricht, ist eine Querschnittszunahme erkennbar größer als im weiteren Verlauf der lochformenden Spitze 22. Im einem zweiten Bereich 32 der Länge der lochformenden Spitze 22, in Fig.1 entsprechend einem zweiten Drittel der Länge, ist die Querschnittszunahme geringer als im ersten Bereich 30, aber noch größer als in einem dritten Bereich 34 der Länge der lochformenden Spitze 22, in Fig. 1 entsprechend einem dritten Drittel der Länge.

Die prozentuale Zunahme des Querschnitts der lochformenden Spitze 22 ist in Fig. 5 aufgetragen. Ein Ausgangswert wird in Abweichung von der Darstellung der Fig. 5 nicht bei 0 mm, also nicht am freien Ende 28 der lochformenden Spitze 22 gemessen, sondern bei etwa 1/10 bis 1/20 der Länge der lochformenden Spitze. In Fig. 1 ist eine Linie 36 eingezeichnet, die bei etwa 1/20 der Länge der lochformenden Spitze 22 liegt, wobei die Linie 36 eine gedachte Linie darstellt und zur Messung des Ausgangswerts für eine prozentuale Querschnittszunahme dient. Im ersten Bereich 30, in der Darstellung der Fig. 5 also von 0 mm bis 4 mm, steigt der Querschnitt stark an und liegt bei 4 mm bei 69 % des Endquerschnitts am Ende der lochformenden Spitze 22 bei 12 mm. Ausgehend vom Ausgangswert 18 % nimmt der Querschnitt im ersten Bereich 30 somit um 51 % zu.

Im zweiten Bereich 32 steigt der Querschnitt prozentual von 69 % auf 92 % des Endquerschnitts bei 12 mm am Ende der lochformenden Spitze 22. Eine Querschnittszunahme im zweiten Bereich 32 liegt infolgedessen bei 23 % und ist damit deutlich geringer als im ersten Bereich 30.

Im dritten Bereich 34 nimmt der Querschnitt der lochformenden Spitze 22 von 92 % auf den Endwert von 100 % zu. Im Verlauf des dritten Bereichs 34 nimmt der Querschnitt der lochformenden Spitze 22 infolgedessen nur noch um 8 % zu, also deutlich weniger als im zweiten Bereich 32 und wesentlich weniger als im ersten Bereich 30.

Fig. 5 sowie Fig. 1 ist darüber hinaus zu entnehmen, dass der Querschnitt der lochformenden Spitze 22 über die gesamte Länge der lochformenden Spitze 22 bis zum Übergang in das Furchgewinde 24, also im ersten Bereich 30, im zweiten Bereich 32 und im dritten Bereich 34 ansteigt. Die lochformende Spitze 22 weist infolgedessen keinen zylindrischen Abschnitt auf.

Bei der dargestellten Ausführungsform haben die unterschiedlichen Bereiche 30, 32, 34 der lochformenden Spitze 32 jeweils eine Länge, die einem Drittel der Länge der lochformenden Spitze 22 entspricht. Die Länge der Bereiche 30, 32, 34 kann aber im Rahmen der Erfindung auch zwischen dem 0,2-Fachen bis 0,4-Fachen der Länge der Spitze liegen und insbesondere können die Bereiche 30, 32, 34 auch unterschiedlich lang sein.

Fig. 4 zeigt eine Seitenansicht der Schraube 10 der Fig. 1. In Fig. 4 eingezeichnet ist ein erster Längenabschnitt 40 des Schafts 12 der lochformenden Schraube 10, der sich ausgehend vom freien Ende 28 des Schafts bis in das Furchgewinde 24 hineinerstreckt. In diesem Bereich 40 hat der Schaft 12 einen polygonartigen Querschnitt. Wie bereits ausgeführt wurde, hat der polygonartige Querschnitt einen Inkreis und einen Umkreis, wobei eine Differenz des Umkreises und des Inkreises das sogenannte K-Maß des Schafts 12 bestimmt. In einem weiteren Abschnitt 42, der sich über einen Teil des Furchgewindes 24 bis zur Unterseite des Schraubenkopfs 14 erstreckt, ist der Querschnitt des Schafts 12 hingegen kreisförmig. Zwischen dem ersten Abschnitt 40 und dem zweiten Abschnitt 42 liegt ein Übergangsabschnitt 44, in dem der Querschnitt des Schafts 12 von dem polygonartigen Querschnitt im Bereich 40 auf den kreisförmigen Querschnitt des Bereichs 42 übergeht. Der Übergangsabschnitt 44 liegt im Bereich des Furchgewindes 24. Ein Furchabschnitt 43 liegt teilweise im Bereich 40 und teilweise im Übergangsabschnitt 44. Im Furchabschnitt 43 steigt ein Außendurchmesser des Furchgewindes 24 an. Die Flankenhöhe des Furchgewindes 24 steigt im Furchabschnitt 43 von Null auf den maximalen Endwert an. Mit dem Furchabschnitt 24 wird ein Großteil der Materialumformung beim Einfurchen eines Gewindes in ein oder mehrere Bauteile geleistet.

Im Rahmen der Erfindung ändert sich die Differenz des Umkreises und des Inkreises, also das sogenannte K-Maß, über die Länge der lochformenden Spitze 22.

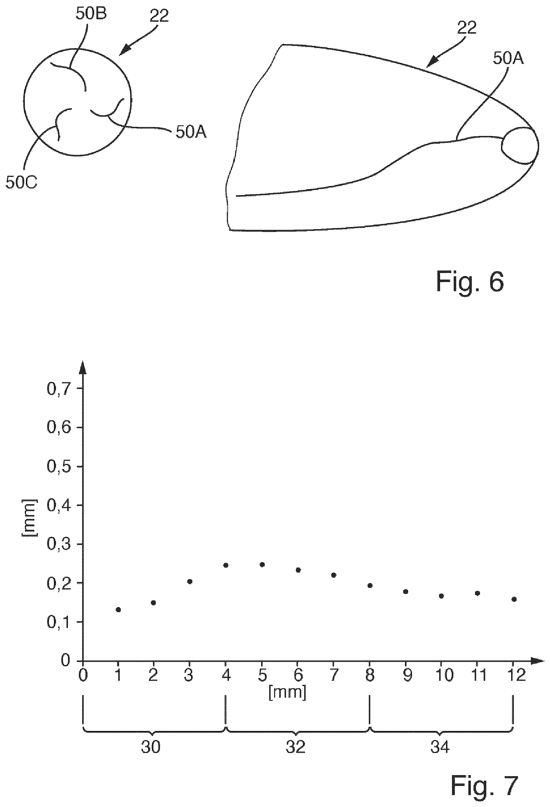

Darüber hinaus ändert sich eine Winkelposition der ersten Umfangsabschnitte mit kleiner konvexer Krümmung und großem Krümmungsradius und der zweiten Umfangsabschnitte mit großer konvexer Krümmung und kleinem Krümmungsradius über eine Länge der lochformenden Spitze 22 gesehen. Bei der Schraube gemäß Fig. 1 entsteht dadurch ein Drall im Bereich der lochformenden Spitze 22. Die beiden schematischen Darstellungen der lochformenden Spitze 22 in Fig. 6 verdeutlichen den Drall im Bereich der lochformenden Spitze 22. Die beiden Darstellungen der Fig. 6 sind jeweils durch in kleinem Abstand nebeneinandergelegte Schnitte durch den Schaft 12 gebildet. Die durchgehenden Linien 50A, 50B, 50C in Fig. 6 markieren jeweils die Mitte eines jeweiligen zweiten Umfangsabschnitts mit großer konvexer Krümmung und kleinem Krümmungsradius. Es ist zu erkennen, dass sich eine Winkelposition der ersten Umfangsabschnitte und der zweiten Umfangsabschnitte um eine Mittellängsachse des Schafts 12 entlang der lochformenden Spitze 22 ändert, entsprechend einem Drall des polygonartigen Querschnitts. Es ist Fig. 6 darüber hinaus zu entnehmen, dass sich diese Winkelposition der ersten Umfangsabschnitte und der zweiten Umfangsabschnitte über die Länge der lochformenden Spitze 22 gesehen nicht linear, sondern ungleichmäßig ändert. Der oberen Darstellung in Fig. 6 ist zu entnehmen, dass sich die Winkelposition zunächst stark ändert und eine Änderung der Winkelposition dann geringer wird. Mit anderen Worten weist die lochformende Spitze 22 in einem ersten Längenbereich einen stärkeren Drall auf als in einem zweiten Längenbereich, der sich an den ersten Längenbereich anschließt und bis zum schraubenkopfseitigen Ende der Spitze geht.

Fig. 7 zeigt ein Diagramm, aus dem das sogenannte K-Maß zu entnehmen ist. Eine Änderung der Winkelposition der ersten Umfangsabschnitte und der zweiten Umfangsabschnitte um eine Mittellängsachse des Schafts ist ebenfalls zu entnehmen, da sich bei der dargestellten Ausführungsform der Drall, mit anderen Worten eine Winkelposition der ersten Umfangsabschnitte und der zweiten Umfangsabschnitte, gleichlaufend mit dem sogenannten K-Maß ändert, also der Differenz des Umkreises und des Inkreises des polygonartigen Querschnitts. Mit anderen Worten ist in einem Bereich der Drall stark ausgeprägt, in dem auch das K-Maß groß ist.

Fig. 7 ist zu entnehmen, dass sich das K-Maß im ersten Bereich 30 der Länge der lochformenden Spitze 22, bei der dargestellten Ausführungsform also von 0 bis 4 mm, so ändert, dass das K-Maß stark ansteigt. Bei der dargestellten Ausführungsform steigt das K-Maß von einem Wert von 0,1 mm bis auf einen Wert von etwa 0,25 mm am Ende des ersten Bereichs 30 an.

Im zweiten Bereich 32 der Länge der lochformenden Spitze 22 fällt das K-Maß bereits wieder ab, bei der dargestellten Ausführungsform von einem Wert von etwa 0,25 mm auf einen Wert von etwa 0,2 mm. Im dritten Bereich 34 der Länge der lochformenden Spitze 34 fällt das K-Maß weiter ab, allerdings weniger stark als im zweiten Bereich 32. Bei der dargestellten Ausführungsform fällt das K-Maß im dritten Bereich 34 von einem Wert von 0,2 mm auf etwa 0,15 mm ab.

Es ist Fig. 7 zu entnehmen, dass das K-Maß nicht bis auf den Ausgangswert am Beginn der lochformenden Spitze 22 abfällt. Es ist darüber hinaus zu erkennen, dass das K-Maß über die gesamte Länge der lochformenden Spitze 22 nicht auf null abfällt, mit anderen Worten weist die lochformende Spitze 22 somit über ihre gesamte Länge einen polygonartigen Querschnitt auf.

Wie bereits ausgeführt wurde, ist ein Drall der lochformenden Spitze 22 im ersten Bereich 30 stärker als im zweiten Bereich 32 und im dritten Bereich 34. Im zweiten Bereich 32 ist der Drall noch etwas stärker als im dritten Bereich 34.

Mit anderen Worten ändert sich im ersten Bereich 30 der Länge der lochformenden Spitze 22 gesehen eine Winkelposition der ersten Umfangsabschnitte und der zweiten Umfangsabschnitte um eine Mittellängsachse des Schafts pro Längeneinheit stärker als im zweiten Bereich 32 und im dritten Bereich 34.

Im zweiten Bereich 32 ändert sich eine Winkelposition der ersten Umfangsabschnitte und der zweiten Umfangsabschnitte um eine Mittellängsachse des Schafts pro Längeneinheit noch stärker als im dritten Bereich 34.

Wie bereits ausgeführt wurde, beträgt bei der dargestellten Ausführungsform eine Länge der Bereiche 30, 32, 34 jeweils ein Drittel der Länge der lochformenden Spitze 22. Im Rahmen der Erfindung kann eine Länge der Bereiche 30, 32, 34 zwischen 0,2 und 0,4 der Länge der lochformenden Spitze 22 liegen. Insbesondere können die Bereiche 30, 32, 34 auch unterschiedlich lang sein.

Fig. 3 zeigt eine erfindungsgemäße Anordnung 60 mit einer erfindungsgemäßen Schraube 10 und zwei Werkstücken 62, 64, die mit der erfindungsgemäßen Schraube 10 verbunden werden sollen.

Es ist Fig. 3 zu entnehmen, dass eine Länge der lochformenden Spitze 22 größer ist als die Summe der Dicke der beiden Werkstücke 62, 64. Die Länge der lochformenden Spitze 22 ist sogar noch größer als die Summe der Dicken der Werkstücke 62, 64 und der Dicke eines Durchzugs 66, der sich ausgehend von der Unterseite des zweiten Werkstücks 64 beim Bilden einer Durchgangsöffnung durch die beiden Werkstücke 62, 64 mittels der lochformenden Spitze 22 bildet. Als Länge der Durchgangsöffnung wird die in dem gesamten Verbund aus den Bauteilen 62, 64 und dem Durchzug 66 hergestellte Länge der Durchgangsöffnung bezeichnet. Am Beispiel der Fig. 3 ist die Länge der Durchgangsöffnung gleich der Summe der Dicken der Bauteil 62, 64 und der maximalen Dicke des Durchzugs 66. Die Länge der Durchgangsöffnung ist in Fig. 3 mit dem Buchstaben L bezeichnet.

Die Länge der lochformenden Spitze 22 ist also so bemessen, dass die Durchgangsöffnung in den beiden Werkstücken 62, 64 und dem sich bildenden Durchzug 66 bereits vollständig hergestellt ist, bevor der Beginn des Furchgewindes 24 in die Durchgangsöffnung eingreift. Dies ist auch deshalb vorteilhaft, da sich eine Vorschubgeschwindigkeit zwischen der Bildung der Durchgangsöffnung mittels der lochformenden Spitze 22 und dem Einfurchen eines Gewindes mittels des Furchgewindes 24 unterscheidet. Beim Einfurchen eines Gewindes ist der Vorschub durch die Steigung des Furchgewindes 24 vorgegeben, wohingegen der Vorschub bei der Bildung der Durchgangsöffnung mittels der lochformenden Spitze 22 von der Erwärmung der beiden Werkstücke 62, 64 und dem Anpressdruck der Schraube 10 abhängt.

Beim Einfurchen eines Gewindes in die Durchgangsöffnung, also anschließend an den in Fig. 3 dargestellten Zustand, wird von der Oberseite des oberen Werkstücks 62 Material aufgeworfen. Dieses aufgeworfene oder nach oben verdrängte Material des oberen Werkstücks 62 kann dann in der Umfangsnut 18 in der Unterseite des Schraubenkopfs 14 aufgenommen werden. Im endgültig verschraubten Zustand liegt dadurch der Ringbereich 20 an der Unterseite des Schraubenkopfs 14 auf der Oberseite des Werkstücks 62 auf.

## Patentansprüche

1. Fließlochformende Schraube (10) mit einem Schaft (12) und einem Schraubenkopf (14) mit einer Antriebsausbildung, wobei der Schaft (12) abschnittsweise mit einem Furchgewinde (24) und mit einer lochformenden, gewindefreien Spitze (22) versehen ist, wobei die lochformende Spitze (22) wenigstens abschnittsweise einen polygonartigen Querschnitt aufweist, wobei der polygonartige Querschnitt mehrere konvexe erste Umfangsabschnitte mit großem Krümmungsradius und mehrere konvexe zweite Umfangsabschnitte mit kleinem Krümmungsradius aufweist, wobei jeweils ein zweiter Umfangsabschnitt mit kleinem Krümmungsradius zwischen zwei ersten Umfangsabschnitten mit großem Krümmungsradius angeordnet ist, **dadurch gekennzeichnet, dass** eine Querschnittszunahme der Spitze (22) ausgehend vom freien Ende der Spitze (22) in einem ersten Bereich (30) der Länge, der vom freien Ende der Spitze (22) bis zum 0,2-fachen bis 0,4-fachen der Länge geht, insbesondere bis zu einem Drittel der Länge geht, größer ist als im weiteren Verlauf der Spitze (22) bis zum Furchgewinde (24).

2. Fließlochformende Schraube nach Anspruch 1, **dadurch gekennzeichnet, dass** eine Querschnittszunahme der Spitze (22) in einem zweiten Bereich (32) der Länge der Spitze (22), der sich an den ersten Bereich (30) anschließt und bis zum 0,4-fachen bis 0,7-fachen der Länge der Spitze (22) geht, insbesondere ein zweites Drittel der Länge der Spitze (22) einnimmt, größer ist als eine Querschnittszunahme in einem dritten Bereich (34) der Länge der Spitze (22), der sich an den zweiten Bereich (32) anschließt und bis zum Beginn des Furchgewindes (24) geht, insbesondere ein drittes Drittel der Länge der Spitze (22) einnimmt.

3. Fließlochformende Schraube nach Anspruch 1 oder 2, **dadurch gekennzeichnet, dass** eine Differenz der Durchmesser eines Umkreises (C-Maß) und eines Inkreises (E-Maß) des polygonartigen Querschnitts (K-Maß) sich über die Länge der lochformenden Spitze gesehen ändert, wobei insbesondere die Differenz der Durchmesser des Umkreises und des Inkreises des polygonartigen Querschnitts (K-Maß) über die gesamte Länge der lochformenden Spitze gesehen größer Null ist, insbesondere größer als/gleich wie 0,1 mm ist.

4. Fließlochformende Schraube nach Anspruch 3, **dadurch gekennzeichnet, dass** die Differenz der Durchmesser des Umkreises und des Inkreises des polygonartigen Querschnitts (K-Maß), ausgehend vom freien Ende der lochformenden Spitze zunächst ansteigt und dann bis zum Übergang in das Furchgewinde wieder abnimmt, wobei insbesondere die Differenz der Durchmesser des Umkreises und des Inkreises des polygonartigen Querschnitts (K-Maß) ausgehend vom freien Ende der lochformenden Spitze in dem ersten Bereich (30) der Länge der lochformenden Spitze (22) ansteigt und bis zum Übergang in das Furchgewinde (24) wieder absinkt.

5. Fließlochformende Schraube nach Anspruch 4, **dadurch gekennzeichnet, dass** die Differenz der Durchmesser des Umkreises und des Inkreises des polygonartigen Querschnitts (K-Maß) ausgehend vom freien Ende der lochformende Spitze vom Ausgangswert bis auf das 2-fache bis 3-fache des Ausgangswerts ansteigt, wobei insbesondere der Ausgangswert ausgehend vom freien Ende der Spitze bei 1/10 bis 1/20 der Länge der lochformenden Spitze gemessen wird, wobei insbesondere der Ausgangswert der Differenz der Durchmesser des Umkreises und des Inkreises des polygonartigen Querschnitts (K-Maß) zwischen 0,1 mm und 0,2 mm, insbesondere zwischen 0,1 mm und 0,15 mm, liegt.

6. Fließlochformende Schraube nach einem der vorstehenden Ansprüche, **dadurch gekennzeichnet, dass** die Differenz der Durchmesser des Umkreises und des Inkreises des polygonartigen Querschnitts (K-Maß), ausgehend vom freien Ende der lochformenden Spitze (22) im ersten Bereich der Länge der lochformenden Spitze (22) ansteigt und dann bis zum Übergang in das Furchgewinde (24) wieder bis auf den Ausgangswert am freien Ende der Spitze, insbesondere bei 1/20 bis 1/10 der Länge der Spitze, abnimmt, oder bis auf das 1,6-fache bis 1,3-fache des Ausgangswerts abnimmt.

7. Fließlochformende Schraube nach einem der vorstehenden Ansprüche, **dadurch gekennzeichnet, dass**, über die Länge der lochformenden Spitze gesehen, sich eine Winkelposition der ersten Umfangsabschnitte und der zweiten Umfangsabschnitte um eine Mittelängsachse des Schafts ändert, wobei insbesondere sich die Winkelposition der ersten Umfangsabschnitte und der zweiten Umfangsabschnitte über die gesamte Länge der Spitze gesehen zwischen mehr als 0 Grad bis 50 Grad, insbesondere zwischen 20 Grad und 45 Grad, ändert.

8. Fließlochformende Schraube nach Anspruch 7, **dadurch gekennzeichnet, dass** sich die Winkelposition der ersten Umfangsabschnitte und der zweiten Umfangsabschnitte in dem ersten Bereich (30) der Länge der lochformenden Spitze (22) stärker ändert als in dem zweiten Bereich (32) und dem dritten Bereich (34) der Länge der Spitze (22), wobei sich der zweite Bereich (32) an den ersten Bereich (32) anschließt und der dritte Bereich (34) bis zum Übergang in das Furchgewinde (24) geht.

9. Fließlochformende Schraube nach Anspruch 7 oder 8, **dadurch gekennzeichnet, dass** sich die Winkelposition der ersten Umfangsabschnitte und der zweiten Umfangsabschnitte im ersten Bereich (30) der Länge der Spitze (22) zwischen mehr als 0 Grad bis 50 Grad, insbesondere zwischen 20 Grad und 45 Grad, ändert.

10. Fließlochformende Schraube nach wenigstens einem der vorstehenden Ansprüche, **dadurch gekennzeichnet, dass** ein Krümmungsradius des freien Endes der Spitze (22) zwischen 0,4mm und 0,6mm liegt.

11. Fließlochformende Schraube nach wenigstens einem der vorstehenden Ansprüche, **dadurch gekennzeichnet, dass** eine Länge der lochformenden Spitze (22) 40% bis 60%, insbesondere 50%, der Länge des Schraubenschafts (12) beträgt.

12. Fließlochformende Schraube nach einem der vorstehenden Ansprüche, **dadurch gekennzeichnet, dass** die Schraube (10) aus einem legierten oder unlegierten Werkzeugstahl hergestellt ist, wobei insbesondere der Werkzeugstahl gehärtet ist, wobei insbesondere die Schraube (10) mit einer Korrosionsschutzbeschichtung und einer Versiegelung versehen ist.

13. Anordnung mit einer fließlochformenden Schraube (10) nach einem der vorstehenden Ansprüche und mindestens zwei Werkstücken (62, 64), die mittels der fließlochformenden Schraube (10) miteinander verbunden sind, wobei eine Länge der Spitze (22) gleich groß ist wie oder größer ist als eine Länge einer mittels der Schraube (10) in den beiden Werkstücken (62, 64) hergestellten Durchgangsöffnung.

14. Verfahren zum Verbinden von mindestens zwei Werkstücken (62, 64) mit einer fließlochformenden Schraube (10) nach wenigstens einem der Ansprüche 1 bis 12, **gekennzeichnet durch** Herstellen einer Durchgangsöffnung mittels der lochformenden Spitze (22) der Schraube (10) und nach dem Herstellen der Durchgangsöffnung, Furchen eines Gewindes in der Durchgangsöffnung mittels des Furchgewindes (24) der Schraube (10).

## Claims

1. Flow-hole-forming screw (10) having a shank (12) and a screw head (14) with a drive formation, wherein the shank (12) is provided partially with a tapping thread (24) and with a thread-free hole-forming tip (22), wherein the hole-forming tip (22) at least partially has a polygonal cross section, wherein the polygonal cross section has a plurality of convex first peripheral portions with a large radius of curvature and a plurality of convex second peripheral portions with a small radius of curvature, wherein in each case one second peripheral portion with a small radius of curvature is arranged between two first peripheral portions with a large radius of curvature, **characterized in that** a cross-sectional enlargement of the tip (22), starting from the free end of the tip (22), is greater in a first region (30) of the length, which extends from the free end of the tip (22) as far as 0.2 to 0.4 times the length, in particular as far as one third of the length, than over the remaining course of the tip (22) as far as the tapping thread (24).

2. Flow-hole-forming screw according to Claim 1, **characterized in that** a cross-sectional enlargement of the tip (22) is greater in a second region (32) of the length of the tip (22), which adjoins the first region (30) and extends as far as 0.4 to 0.7 times the length of the tip (22), in particular takes up a second third of the length of the tip (22), than a cross-sectional enlargement in a third region (34) of the length of the tip (22), which adjoins the second region (32) and extends as far as the start of the tapping thread (24), in particular takes up a third third of the length of the tip (22).

3. Flow-hole-forming screw according to Claim 1 or 2, **characterized in that** a difference between the diameters of a circumscribed circle (C dimension) and an inscribed circle (E dimension) of the polygonal cross section (K dimension) changes as seen along the length of the hole-forming tip, wherein, in particular, the difference between the diameters of the circumscribed circle and the inscribed circle of the polygonal cross section (K dimension) is greater than zero, in particular greater than/equal to 0.1 mm, as seen along the entire length of the hole-forming tip.

4. Flow-hole-forming screw according to Claim 3, **characterized in that** the difference between the diameters of the circumscribed circle and the inscribed circle of the polygonal cross section (K dimension) initially increases starting from the free end of the hole-forming tip, and then decreases again as far as the transition into the tapping thread, wherein, in particular, the difference between the diameters of the circumscribed circle and the inscribed circle of the polygonal cross section (K dimension) increases starting from the free end of the hole-forming tip in the first region (30) of the length of the hole-forming tip (22) and drops again as far as the transition into the tapping thread (24).

5. Flow-hole-forming screw according to Claim 4, **characterized in that** the difference between the diameters of the circumscribed circle and the inscribed circle of the polygonal cross section (K dimension) increases starting from the free end of the hole-forming tip from the initial value to 2 to 3 times the initial value, wherein, in particular, the initial value is measured starting from the free end of the tip at 1/10 to 1/20 of the length of the hole-forming tip, wherein, in particular, the initial value of the difference between the diameters of the circumscribed circle and the inscribed circle of the polygonal cross section (K dimension) lies between 0.1 mm and 0.2 mm, in particular between 0.1 mm and 0.15 mm.

6. Flow-hole-forming screw according to any of the preceding claims, **characterized in that** the difference between the diameters of the circumscribed circle and the inscribed circle of the polygonal cross section (K dimension), starting from the free end of the hole-forming tip (22), increases in the first region of the length of the hole-forming tip (22) and then decreases again, as far as the transition into the tapping thread (24), to the initial value at the free end of the tip, in particular at 1/20 to 1/10 of the length of the tip, or decreases to 1.6 to 1.3 times the initial value.

7. Flow-hole-forming screw according to any of the preceding claims, **characterized in that**, as seen along the length of the hole-forming tip, an angular position of the first peripheral portions and of the second peripheral portions changes about a longitudinal centre axis of the shank, wherein, in particular, the angular position of the first peripheral portions and of the second peripheral portions changes, as seen along the entire length of the tip, between more than 0 degrees and 50 degrees, in particular between 20 degrees and 45 degrees.

8. Flow-hole-forming screw according to Claim 7, **characterized in that** the angular position of the first peripheral portions and of the second peripheral portions changes more greatly in the first region (30) of the length of the hole-forming tip (22) than in the second region (32) and the third region (34) of the length of the tip (22), wherein the second region (32) adjoins the first region (32) and the third region (34) extends as far as the transition into the tapping thread (24).

9. Flow-hole-forming screw according to Claim 7 or 8, **characterized in that** the angular position of the first peripheral portions and of the second peripheral portions changes, in the first region (30) of the length of the tip (22), between more than 0 degrees and 50 degrees, in particular between 20 degrees and 45 degrees.

10. Flow-hole-forming screw according to at least one of the preceding claims, **characterized in that** a radius of curvature of the free end of the tip (22) lies between 0.4 mm and 0.6 mm.

11. Flow-hole-forming screw according to at least one of the preceding claims, **characterized in that** a length of the hole-forming tip (22) amounts to 40% to 60%, in particular 50%, of the length of the screw shank (12).

12. Flow-hole-forming screw according to any of the preceding claims, **characterized in that** the screw (10) is made from an alloyed or unalloyed tool steel, wherein, in particular, the tool steel has been hardened, wherein, in particular, the screw (10) is provided with an anticorrosion coating and a seal.

13. Arrangement having a flow-hole-forming screw (10) according to any of the preceding claims and at least two workpieces (62, 64) which have been connected together by means of the flow-hole-forming screw (10), wherein a length of the tip (22) is greater than or equal to a length of a through-opening produced by means of the screw (10) in the two workpieces (62, 64).

14. Method for connecting at least two workpieces (62, 64) by means of a flow-hole-forming screw (10) according to at least one of Claims 1 to 12, **characterized by** producing a through-opening by means of the hole-forming tip (22) of the screw (10) and, following the production of the through-opening, tapping a thread in the through-opening by means of the tapping thread (24) of the screw (10).

## Revendications

1. Vis à formation de trou par fluage (10) comprenant une tige (12) et une tête de vis (14) comportant une configuration d'entraînement, la tige (12) étant pourvue, par sections, d'un filet autotaraudeur (24) et d'une pointe de formation de trou sans filet (22), la pointe de formation de trou (22) présentant, au moins par sections, une section transversale de type polygonal, la section transversale de type polygonal présentant plusieurs premiers segments périphériques convexes ayant un grand rayon de courbure et plusieurs deuxièmes segments périphériques convexes ayant un petit rayon de courbure, chaque deuxième segment périphérique ayant un petit rayon de courbure étant disposé entre deux premiers segments périphériques ayant un grand rayon de courbure, **caractérisée en ce qu'**une augmentation de section transversale de la pointe (22), à partir de l'extrémité libre de la pointe (22), est plus importante dans une première zone (30) de la longueur, s'étendant de l'extrémité libre de la pointe (22) jusqu'à 0,2 fois à 0,4 fois la longueur, notamment jusqu'à un tiers de la longueur, que dans la suite de la pointe (22) jusqu'au filet autotaraudeur (24).

2. Vis à formation de trou par fluage selon la revendication 1, **caractérisée en ce qu'**une augmentation de section transversale de la pointe (22) dans une deuxième zone (32) de la longueur de la pointe (22), qui fait suite à la première zone (30) et s'étend jusqu'à 0,4 fois à 0,7 fois la longueur de la pointe (22), occupant notamment un deuxième tiers de la longueur de la pointe (22), est plus importante qu'une augmentation de section transversale dans une troisième zone (34) de la longueur de la pointe (22), qui fait suite à la deuxième zone (32) et s'étend jusqu'au début du filet autotaraudeur (24), occupant notamment un troisième tiers de la longueur de la pointe (22).

3. Vis à formation de trou par fluage selon la revendication 1 ou 2, **caractérisée en ce qu'**une différence entre les diamètres d'un cercle circonscrit (dimension C) et d'un cercle inscrit (dimension E) de la section transversale de type polygonal (dimension K) varie sur la longueur de la pointe de formation de trou, en particulier **en ce que** la différence entre les diamètres du cercle circonscrit et du cercle inscrit de la section transversale de type polygonal (dimension K), considérée sur l'ensemble de la longueur de la pointe de formation de trou, est supérieure à zéro, en particulier supérieure ou égale à 0,1 mm.

4. Vis à formation de trou par fluage selon la revendication 3, **caractérisée en ce que** la différence entre les diamètres du cercle circonscrit et du cercle inscrit de la section transversale de type polygonal (dimension K), à partir de l'extrémité libre de la pointe de formation de trou, augmente d'abord puis diminue à nouveau jusqu'à la transition vers le filet autotaraudeur, en particulier **en ce que** la différence entre les diamètres du cercle circonscrit et du cercle inscrit de la section transversale de type polygonal (dimension K), à partir de l'extrémité libre de la pointe de formation de trou, augmente dans la première zone (30) de la longueur de la pointe de formation de trou (22) puis diminue à nouveau jusqu'à la transition vers le filet autotaraudeur (24).

5. Vis à formation de trou par fluage selon la revendication 4, **caractérisée en ce que** la différence entre les diamètres du cercle circonscrit et du cercle inscrit de la section transversale de type polygonal (dimension K), à partir de l'extrémité libre de la pointe de formation de trou, augmente depuis une valeur initiale jusqu'à atteindre 2 à 3 fois la valeur initiale, la valeur initiale étant notamment mesurée, à partir de l'extrémité libre de la pointe, à 1/10 à 1/20 de la longueur de la pointe de formation de trou, la valeur initiale de la différence entre les diamètres du cercle circonscrit et du cercle inscrit de la section transversale de type polygonal (dimension K) étant notamment comprise entre 0,1 mm et 0,2 mm, en particulier entre 0,1 mm et 0,15 mm.

6. Vis à formation de trou par fluage selon l'une quelconque des revendications précédentes, **caractérisée en ce que** la différence entre les diamètres du cercle circonscrit et du cercle inscrit de la section transversale de type polygonal (dimension K), à partir de l'extrémité libre de la pointe de formation de trou (22), augmente dans la première zone de la longueur de la pointe de formation de trou (22), puis diminue à nouveau jusqu'à la transition vers le filet autotaraudeur (24), jusqu'à la valeur initiale à l'extrémité libre de la pointe, notamment à 1/20 à 1/10 de la longueur de la pointe, ou jusqu'à 1,6 fois à 1,3 fois la valeur initiale.

7. Vis à formation de trou par fluage selon l'une quelconque des revendications précédentes, **caractérisée en ce que**, considérée sur la longueur de la pointe de formation de trou, une position angulaire des premiers segments périphériques et des deuxièmes segments périphériques varie autour d'un axe longitudinal central de la tige, la position angulaire des premiers segments périphériques et des deuxièmes segments périphériques variant notamment, considérée sur l'ensemble de la longueur de la pointe, entre plus de 0 degré et 50 degrés, en particulier entre 20 degrés et 45 degrés.

8. Vis à formation de trou par fluage selon la revendication 7, **caractérisée en ce que** la position angulaire des premiers segments périphériques et des deuxièmes segments périphériques varie plus fortement dans la première zone (30) de la longueur de la pointe de formation de trou (22) que dans la deuxième zone (32) et la troisième zone (34) de la longueur de la pointe (22), la deuxième zone (32) faisant suite à la première zone (32) et la troisième zone (34) s'étendant jusqu'à la transition vers le filet autotaraudeur (24).

9. Vis à formation de trou par fluage selon la revendication 7 ou 8, **caractérisée en ce que** la position angulaire des premiers segments périphériques et des deuxièmes segments périphériques varie, dans la première zone (30) de la longueur de la pointe (22), entre plus de 0 degré et 50 degrés, en particulier entre 20 degrés et 45 degrés.

10. Vis à formation de trou par fluage selon au moins l'une quelconque des revendications précédentes, **caractérisée en ce qu'**un rayon de courbure de l'extrémité libre de la pointe (22) est compris entre 0,4 mm et 0,6 mm.

11. Vis à formation de trou par fluage selon au moins l'une quelconque des revendications précédentes, **caractérisée en ce qu'**une longueur de la pointe de formation de trou (22) représente 40 % à 60 %, en particulier 50 %, de la longueur de la tige de vis (12).

12. Vis à formation de trou par fluage selon l'une quelconque des revendications précédentes, **caractérisée en ce que** la vis (10) est fabriquée à partir d'un acier à outils allié ou non allié, l'acier à outils étant notamment trempé, la vis (10) étant notamment pourvue d'un revêtement anticorrosion et d'un revêtement d'étanchéité.

13. Agencement comprenant une vis à formation de trou par fluage (10) selon l'une quelconque des revendications précédentes et au moins deux pièces (62, 64) qui sont reliées l'une à l'autre au moyen de la vis à formation de trou par fluage (10), une longueur de la pointe (22) étant égale ou supérieure à une longueur d'une ouverture traversante réalisée au moyen de la vis (10) dans les deux pièces (62, 64).

14. Procédé de liaison d'au moins deux pièces (62, 64) au moyen d'une vis à formation de trou par fluage (10) selon au moins l'une quelconque des revendications 1 à 12, **caractérisé par** la réalisation d'une ouverture traversante au moyen de la pointe de formation de trou (22) de la vis (10) et, après la réalisation de l'ouverture traversante, par le formage d'un filetage dans l'ouverture traversante au moyen du filet autotaraudeur (24) de la vis (10).
